# EUROPÄISCHE PATENTSCHRIFT

(11) **EP 2 468 504 B1**
(45) Veröffentlichungstag und Bekanntmachung des Hinweises auf die Patenterteilung: **17.07.2013**
(21) Anmeldenummer: 11186485.6
(22) Anmeldetag: 25.10.2011
(51) Int. Cl.: B32B 37/12, B05C 1/08, B32B 38/06

(54) **Verfahren und Vorrichtung zur Herstellung einer Laminierfolie**
Method and device for producing a laminating film
Procédé et dispositif destinés à la fabrication d'un film de lamination

(30) Priorität: 21.12.2010 DE 102010055280
(43) Veröffentlichungstag der Anmeldung: 27.06.2012
(73) Patentinhaber: Esselte Leitz GmbH & Co. KG, 70469 Stuttgart (DE)
(72) Erfinder: Schneider, Thomas, 71229 Leonberg (DE); Schneider, Ulrich, 70563 Stuttgart (DE)
(74) Vertreter: Reule, Hanspeter

(56) Entgegenhaltungen:
- EP-A2- 1 520 632
- DE-A1- 19 814 689
- DE-U1- 8 705 742
- US-A- 2 804 678
- US-A- 3 312 191

## Beschreibung

Die Erfindung betrifft ein Verfahren und eine Vorrichtung zur Herstellung einer Laminierfolie.

Laminierfolien werden verwendet, um Schriftgut aus Papier vor Umwelteinflüssen wie beispielsweise Feuchtigkeit zu schützen. Sie weisen eine meist transparente Kunststofffolie auf, die mit einer Klebstoffschicht versehen ist. Die Klebstoffschicht wird beim Erhitzen viskos und verbindet sich mit dem Papier, indem das Papier den Klebstoff teilweise aufsaugt. Auf diese Weise verbindet sich die Kunststofffolie fest mit dem Papier. Aus der DE 10 2008 057 006 A1 ist es bekannt, eine Laminierfolie mit einer Markierung zu versehen, die von einem Sensor im Laminiergerät ausgelesen werden kann. Diese Markierung wird durch einen Flächenbereich der Klebstoffschicht gebildet, der eine andere Rauigkeit aufweist, insbesondere glatter ist als die übrige Fläche der Klebstoffschicht. Beim Laminieren soll der Klebstoff dann so zerfließen, dass nach dem Laminiervorgang die Markierung, die dann als störend empfunden würde, nicht mehr sichtbar ist. Dabei lehrt die DE-10 2008 057 006 A1, die Klebstoffschicht zunächst flächig mit einer Anfangsrauigkeit zu versehen und anschließend die Markierung mittels Walzen durch Glättung der Anfangsrauigkeit aufzubringen. Dieses Herstellverfahren hat sich in der Praxis jedoch nicht hinreichend bewährt. Die nachträglich geglätteten Bereiche der aufgerauten Klebstoffschicht zerfließen im Laminiergerät nicht hinreichend gut, so dass Reste der Markierung auch nach dem Laminiervorgang sichtbar bleiben, was als störend empfunden wird. Aus der DE 87 05 742 U1, der EP 1 520 632 A2 und der DE 198 14 689 A1 ist jeweils eine Vorrichtung zum Auftragen einer fließfähigen Masse auf eine Bahn bekannt.

Es ist daher Aufgabe der Erfindung, ein Verfahren und eine Vorrichtung zur Herstellung einer Laminierfolie zu schaffen, das die Herstellung einer Lami-nierfolie ermöglicht, bei der die genannten Nachteile reduziert oder vermieden werden.

Diese Aufgabe wird erfindungsgemäß durch ein Verfahren mit den Merkmalen des Anspruchs 1 und eine Vorrichtung mit den Merkmalen des Anspruchs 5 gelöst. Vorteilhafte Weiterbildungen der Erfindung sind Gegenstand der abhängigen Ansprüche.

Der Erfindung liegt der Gedanke zugrunde, den Klebstoff direkt nach seinem Aufbringen auf die Kunststofffolie, wenn er noch heiß und flüssig ist, mit der Walze zu bearbeiten. Somit werden die Bereiche mit größerer und geringerer Rauigkeit nahezu gleichzeitig auf die noch heiße Klebstoffschicht geprägt, so dass die Klebstoffschicht in hohem Maße gleichmäßig ist, aber nach dem Abkühlen und Erstarren dennoch stärker aufgeraute, mattere Bereiche sowie weniger aufgeraute und besser durchsichtige Bereiche aufweist, so dass eine für den Benutzer sichtbare Markierung entsteht. Es hat sich gezeigt, dass die Bereiche der Klebstoffschicht mit unterschiedlichen Rauigkeiten beim Laminiervorgang besser zerfließen, als wenn eine bereits erstarrte, aufgeraute Klebstoffschicht bei der Herstellung der Laminierfolie nachträglich mit Walzen geglättet wurde.

Vorzugsweise ist bzw. sind der zweite Oberflächenbereich bzw. die zweiten Oberflächenbereiche glatt, so dass sich die von ihm bzw. von ihnen bearbeiteten Flächenbereiche der Klebstoffschicht optisch gut aufgrund ihrer deutlich höheren Transparenz von den aufgerauten, matten Flächenbereichen unterscheiden, die durch Bearbeitung mittels der ersten Oberflächenbereiche bzw. des ersten Oberflächenbereichs hergestellt werden. Zweckmäßig ist die Klebstoffschicht vor der Berührung mit der Walze wärmer als die Walze und die Walze wird mittels eines Kühlmittels gekühlt. Somit werden nicht nur alle Flächenbereiche der Klebstoffschicht in einem Arbeitsschritt bearbeitet, sondern es wird zudem die Klebstoffschicht im selben Arbeitsschritt gekühlt, so dass sie schneller erstarrt und der Herstellungsvorgang schneller abgeschlossen ist.

Der zweite Oberflächenbereich oder die zweiten Oberflächenbereiche bildet bzw. bilden vorzugsweise einen Richtungspfeil oder ein Werbelogo. Auch eine Maßangabe, beispielsweise für die Dicke der verwendeten Kunststofffolie, ist möglich. Der Richtungspfeil kann dazu dienen, anzuzeigen, in welche Richtung die Laminierfolie in das Laminiergerät eingelegt werden soll.

Die erfindungsgemäße Vorrichtung zur Herstellung der Laminierfolie weist neben der Walze eine Fördereinrichtung auf, mit der die mit dem Klebstoff versehene Kunststofffolie zur Walze gefördert wird. Die unterschiedlichen Rauigkeiten der Oberflächenbereiche der Walze werden zweckmäßig dadurch erzielt, dass ihre Oberfläche bereichsweise durch Sandstrahlen, Ätzen oder Laserbearbeiten aufgeraut wird. Dabei wird bzw. werden der zweite Oberflächenbereich bzw. die zweiten Oberflächenbereiche abgedeckt, so dass er bzw. sie im Gegensatz zum ersten Oberflächenbereich bzw. zu den ersten Oberflächenbereichen durch die Bearbeitung nicht zusätzlich aufgeraut wird bzw. werden. Die Walze weist zweckmäßig eine Einrichtung zur Durchleitung eines Kühlmittels auf, um sie während des Herstellungsvorgangs zu kühlen und dabei dem heißen Klebstoff Wärme zu entziehen.

Zusammenfassend ist folgendes festzuhalten: Die Erfindung betrifft ein Verfahren und eine Vorrichtung zur Herstellung einer Laminierfolie, wobei erhitzter viskoser Klebstoff als Klebstoffschicht auf eine transparente Kunststofffolie aufgetragen wird, wobei die Kunststofffolie über eine rotierende Walze geführt wird, deren Oberfläche mindestens einen ersten Oberflächenbereich und mindestens einen zweiten Oberflächenbereich aufweist, wobei der zweite Oberflächenbereich oder die zweiten Oberflächenbereiche eine geringere Oberflächenrauigkeit aufweist bzw. aufweisen als der erste Oberflächenbereich oder die ersten Oberflächenbereiche, wobei die Walze der Klebstoffschicht bereichsweise eine durch die Oberflächenrauigkeiten der Oberflächenbereiche bestimmte Rauigkeit aufprägt, wobei die Klebstoffschicht abgekühlt wird und wobei die Viskosität der Klebstoffschicht beim Abkühlen zunimmt und der Klebstoff vorzugsweise erstarrt.

## Patentansprüche

1. Verfahren zur Herstellung einer Laminierfolie, wobei erhitzter viskoser Klebstoff als Klebstoffschicht auf eine transparente Kunststofffolie aufgetragen wird, wobei die Kunststofffolie über eine rotierende Walze geführt wird, deren Oberfläche mindestens einen ersten Oberflächenbereich und mindestens einen zweiten Oberflächenbereich aufweist, wobei der zweite Oberflächenbereich oder die zweiten Oberflächenbereiche eine geringere Oberflächenrauigkeit aufweist bzw. aufweisen als der erste Oberflächenbereich oder die ersten Oberflächenbereiche, wobei die Walze der Klebstoffschicht bereichsweise eine durch die Oberflächenrauigkeiten der Oberflächenbereiche bestimmte Rauigkeit aufprägt, wobei die Klebstoffschicht abgekühlt wird und wobei die Viskosität der Klebstoffschicht beim Abkühlen zunimmt und der Klebstoff vorzugsweise erstant.

2. Verfahren nach Anspruch 1, **dadurch gekennzeichnet, dass** der zweite Oberflächenbereich oder die zweiten Oberflächenbereiche glatt sind.

3. Verfahren nach Anspruch 1 oder 2, **dadurch gekennzeichnet, dass** die Klebstoffschicht vor der Berührung mit der Walze wärmer ist als die Walze und dass die Walze mittels eines Kühlmittels gekühlt wird.

4. Verfahren nach einem der vorangehenden Ansprüche, **dadurch gekennzeichnet, dass** der zweite Oberflächenbereich oder die zweiten Oberflächenbereiche einen Richtungspfeil oder ein Werbelogo bildet bzw. bilden.

5. Vorrichtung zur Herstellung einer Laminierfolie mit einer Fördereinrichtung zum Fördern einer Kunststofffolie, auf die eine Schicht erhitzter, viskoser Klebstoff aufgetragen ist, und mit einer Walze zum Aufprägen einer Rauigkeit auf die Klebstoffschicht, wobei die Oberfläche der Walze mindestens einen ersten Oberflächenbereich und mindestens einen zweiten Oberflächenbereich aufweist, wobei der zweite Oberflächenbereich oder die zweiten Oberflächenbereiche eine geringere Oberflächenrauigkeit aufweist bzw. aufweisen als der erste Oberflächenbereich oder die ersten Oberflächenbereiche, und wobei die Walze eine Einrichtung zur Durchleitung eines Kühlmittels aufweist.

6. Vorrichtung nach Anspruch 5, **dadurch gekennzeichnet, dass** der zweite Oberflächenbereich oder die zweiten Oberflächenbereiche glatt sind.

7. Vorrichtung nach Anspruch 5 oder 6, **dadurch gekennzeichnet, dass** der erste Oberflächenbereich oder die ersten Oberflächenbereiche durch Sandstrahlen, Ätzen oder Laserbearbeitung gegenüber dem zweiten Oberflächenbereich oder den zweiten Oberflächenbereichen aufgeraut ist bzw. sind.

8. Vorrichtung nach einem der Ansprüche 5 bis 7, **dadurch gekennzeichnet, dass** der zweite Oberflächenbereich oder die zweiten Oberflächenbereiche einen Richtungspfeil oder ein Werbelogo bildet bzw. bilden

## Claims

1. Method for producing a laminating film, wherein heated viscous adhesive material is applied as an adhesive layer to a transparent plastic film, wherein the plastic film is passed over a rotating roller, the surface of said rotating roller has at least one first surface region and at least one second surface region, wherein the second surface region or the second surface regions has or have less surface roughness than the first surface region or first surface regions, wherein the roller imprints the adhesive layer, in regions, with a roughness determined by the surface roughness of the surface regions and wherein the adhesive layer is cooled and wherein the viscosity of the adhesive layer is increased during cooling and the adhesive material is preferably solidified.

2. Method according to claim 1, **characterised in that** the second surface region or the second surface regions are smooth.

3. Method according to claim 1 or claim 2, **characterised in that** the adhesive layer is hotter than the roller prior to contact with said roller and that the roller is cooled by means of a coolant.

4. Method according to any one of the preceding claims, **characterised in that** the second surface region or the second surface regions form(s) an arrow or an advertising logo.

5. Device for producing a laminating film having a conveyor device for conveying a plastic film onto which a layer of heated viscous adhesive material is applied, and having a roller for imprinting a roughness onto the adhesive layer, wherein the surface of the roller has at least one first surface region and at least one second surface region, wherein the second surface region or the second surface regions has or have less surface roughness than the first surface region or the first surface regions, and wherein the roller has a device for conveying a cooling fluid.

6. Device according to claim 5, **characterised in that** the second surface region or the second surface regions are smooth.

7. Device according to claim 5 or claim 6, **characterised in that** the first surface region or the first surface regions is or are roughened by sand blasting, etching or laser machining compared to the second surface region or the second surface regions.

8. Device according to any one of claims 5 to 7, **characterised in that** the second surface region or the second surface regions form(s) an arrow or an advertising logo.

## Revendications

1. Procédé de fabrication d'un film de lamination, sachant qu'une colle visqueuse chauffée est appliquée comme couche de colle sur un film de matière plastique transparente, sachant qu'on fait passer le film de matière plastique sur un cylindre rotatif dont la surface présente au moins une première région de surface et au moins une deuxième région de surface, sachant que la deuxième région de surface ou les deuxièmes régions de surface présente ou présentent une rugosité de surface inférieure à celle de la première région de surface ou des premières régions de surface, sachant que le cylindre imprime sectoriellement à la couche de colle une rugosité déterminée par les rugosités de surface des régions de surface, sachant que la couche de colle est refroidie et sachant que la viscosité de la couche de colle augmente lors du refroidissement et que, de préférence, la colle se solidifie.

2. Procédé selon la revendication 1, **caractérisé en ce que** la deuxième région de surface ou les deuxièmes régions de surface sont lisses.

3. Procédé selon la revendication 1 ou 2, **caractérisé en ce que** la couche de colle est, avant le contact avec le cylindre, plus chaude que le cylindre, et **en ce que** le cylindre est refroidi au moyen d'un agent de refroidissement.

4. Procédé selon l'une des revendications précédentes, **caractérisé en ce que** la deuxième région de surface ou les deuxièmes régions de surface forme ou forment une flèche indicatrice de direction ou un logo publicitaire.

5. Dispositif de fabrication d'un film de lamination, avec un équipement de transport pour transporter un film de matière plastique sur lequel est appliquée une couche de colle visqueuse chauffée, et avec un cylindre pour imprimer une rugosité à la couche de colle, sachant que la surface du cylindre présente au moins une première région de surface et au moins une deuxième région de surface, sachant que la deuxième région de surface ou les deuxièmes régions de surface présente ou présentent une rugosité de surface inférieure à celle de la première région de surface ou des premières régions de surface, et sachant que le cylindre présente un équipement pour le passage d'un agent de refroidissement.

6. Dispositif selon la revendication 5, **caractérisé en ce que** la deuxième région de surface ou les deuxièmes régions de surface sont lisses.

7. Dispositif selon la revendication 5 ou 6, **caractérisé en ce que** la première région de surface ou les premières régions de surface est ou sont rendue(s) rugueuse(s) par rapport à la deuxième région de surface ou aux deuxièmes régions de surface par sablage, décapage ou traitement au laser.

8. Dispositif selon l'une des revendications 5 à 7, **caractérisé en ce que** la deuxième région de surface ou les deuxièmes régions de surface forme ou forment une flèche indicatrice de direction ou un logo publicitaire.
